# EUROPÄISCHE PATENTSCHRIFT

(11) **EP 1 782 607 B1**
(45) Veröffentlichungstag und Bekanntmachung des Hinweises auf die Patenterteilung: **25.05.2016**
(21) Anmeldenummer: 05777819.3
(22) Anmeldetag: 08.08.2005
(51) Int. Cl.: H04M 3/22, H04L 29/06, H04M 7/12

(54) **VERFAHREN UND VORRICHTUNG ZUM NUTZDATENABGRIFF MULTIMEDIALER VERBINDUNGEN IN EINEM PAKETNETZ**
METHOD AND DEVICE FOR TAPPING USEFUL DATA OF MULTIMEDIA CONNECTIONS IN A PACKET-ORIENTED NETWORK
PROCÉDÉ ET DISPOSITIF DE PRISE DE DONNÉES UTILES DE COMMUNICATIONS MULTIMEDIA D'UN RÉSEAU A COMMUTATION PAR PAQUETS

(30) Priorität: 20.08.2004 DE 102004040479
(43) Veröffentlichungstag der Anmeldung: 09.05.2007
(73) Patentinhaber: Nokia Solutions and Networks GmbH & Co. KG, 81541 Munich (DE)
(72) Erfinder: KREUSCH, Norbert, 82061 Neuried (DE); LÖBIG, Norbert, 64291 Darmstadt (DE); LANZINGER, Karl, 81476 München (DE)
(74) Vertreter: Weidel, Gottfried
(86) Internationale Anmeldenummer: PCT/EP2005/053888
(87) Internationale Veröffentlichungsnummer: WO 2006/021504

(56) Entgegenhaltungen:
- EP-A- 1 389 862
- WO-A2-02/082782
- US-A1- 2004 157 629
- US-B1- 7 260 060
- BAKER F ET AL: "Cisco Support for Lawful Intercept In IP Networks" IETF INTERNET DRAFT, 16. April 2003 (2003-04-16), Seiten 1-16, XP002326616

## Beschreibung

Neuere Kommunikationsarchitekturen, die paket- oder zellbasierte Verfahren wie beispielsweise Voice over IP (VoIP) oder Voice over ATM (VoATM) nutzen, sehen die Trennung der Verbindungssteuerung und Nutzkanalsteuerung vor. Die bislang über herkömmliche leitungsvermittelte Telekommunikationsnetze geführte Kommunikation zwischen ein/ mehreren Teilnehmern wie beispielsweise ISDN/ PSTN Teilnehmern wird dann über IP Netze geführt. Um eine Kommunikation mit herkömmlichen leitungsvermittelten Telekommunikationsnetzen z. B. PSTNs (Public Switched Telephone Networks) weiterhin zu ermöglichen, ist eine "Übersetzung" zwischen den beiden unterschiedlichen Transporttechnologien erforderlich, die in Kopplungspunkten vorgenommen wird. An einem solchen Kopplungspunkt wird die erste Transporttechnologie für die Nutzinformation mittels spezieller, als Media Gateway (MG) bezeichneten Einrichtungen in die zweite Transporttechnologie umgewandelt.

Die Media Gateways selbst werden von zentralen Instanzen, den Media Gateway Controllern (MGC), gesteuert. Die zwischen zwei Media Gateway Controllern übertragenen Signalisierungsinformationen werden z. B. mittels eines BICC Protokolls (Bearer Independent Call Control Protokoll) oder SIP/SIP-T Protokolls transportiert. Die Media Gateway Controller dienen im wesentlichen der Koordination der Media Gateways und überwachen/ steuern Verbindungen (Bearerverbindungen) zwischen den Media Gateways. Die Steuerung der Media Gateways erfolgt z. B. mit Hilfe des MGCP (Media Gateway Controller Protocol) oder auch des H.248-Protokolls.

Bei paketbezogenen Verbindungen, insbesondere bei über das IP-Netz geführten Verbindungen, wird somit der Nutzdatenstrom außerhalb der Vermittlungsstelle direkt zwischen den beteiligten Teilnehmern oder Gateways geführt.

Aus der Veröffentlichung WO02/082782 A2 (NORTEL NETWORKS LTD [CA]; PYKE CRAIK R [CA]; HERN WILLIAM [GB]; THOMSON ROGER L [US] ET AL, 17. Oktober 2002) sind ein System und ein Verfahren zum Abfangen eines Telekommunikationssignals bekannt, in welchen das System und das Verfahren eincairken auf ein Empfangen eines Telekommunikationspakets, welches ein Kopffeld und Nutzdaten umfasst, ein Entfernen eines ersten Kopffeldes von dem Paket, ein Replizieren der Nutzdaten und ein Hinzufügen eines zweiten Kopffeldes zu den replizierten Nutzdaten und ein Leiten der replizierten Nutzdaten zu der mit dem zweiten Kopffeld assoziierten Adresse.

Die gesetzlich vorgeschriebene Möglichkeit des Abgriffs der Nutzdaten (Lawful Interception, LI), im folgenden kurz mit LI bezeichnet, erfolgt üblicherweise über eine konventionelle Schnittstelle außerhalb des Paketnetzes in TDM Technik. Ein von einem abzuhörenden A-Teilnehmer ausgehender Ruf über das Paketnetz mit einer reinen Audioverbindung wird dann in einer TDM Schleife abgegriffen. Dies bedeutet, dass zunächst eine Wandlung nach TDM vorgenommen werden muss. Dort werden die Nutzdaten abgegriffen, zu den Bedarfsträgern (LEAs, Law Enforcement Agency), im folgenden kurz mit LEA bezeichnet, weitergeleitet, danach in das IP Protokoll zurückverwandelt und dem gerufenen Teilnehmer (B-Teilnehmer) zugeführt.

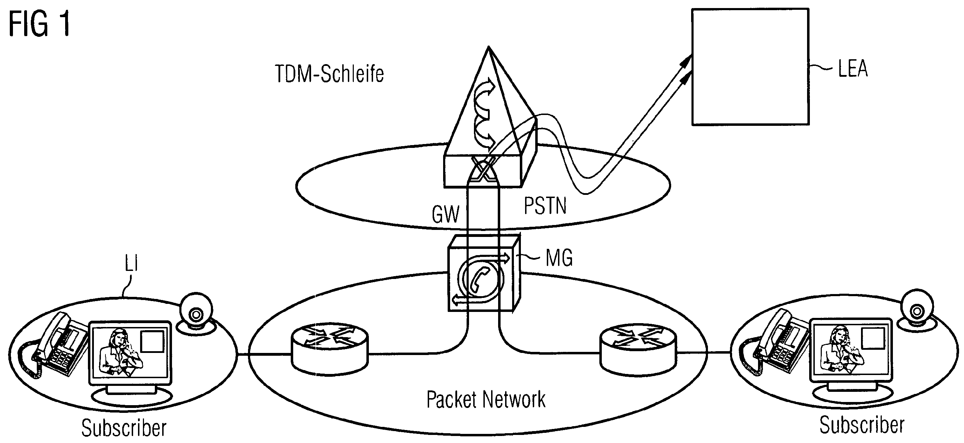

Die entsprechenden Verhältnisse sind in Fig. 1 aufgezeigt. Zum Abgriff der Sprachverbindungen im Paketnetz wird der Datenstrom über Mediagateways MG in einer Schleife zum TDM Netz und zurück geführt. Im TDM Netz wird der Datenstrom in bekannter Weise abgegriffen.

Die zweimalige Wandlung des Nutzdatenstromes bringt aber im Hinblick auf die end-to-end Qualität der übertragenen Nutzdaten gravierende Nachteile mit sich. Dies würde insbesondere auch für Videoinformationen gelten, die im Falle von Videotelephonie abzugreifen wären. Darüber hinaus lassen sich diese breitbandigen Nutzdaten (> 64kbit/s, z. B. Video) nicht problemlos ins schmalbandige TDM Netz überführen. Dies ist auch mit ein Grund, warum TDM Gateways nicht mit Video-Schnittstellen ausgerüstet sind.

Bei Videotelephonie entstehen gemischte Audio-/ Videonutzdaten. Sobald aber eine gemischte Audio- und Videoverbindung im Paketnetz aufgebaut wird, würde bei einem Abgriff via TDM-Wandlung der Video-Anteil/ Strom unterdrückt werden müssen. Damit ist die Teilnehmerverbindung jedoch stark beeinträchtigt (kein Video-Bild), und die Abhörfunktion wäre für den abgehörten Teilnehmer erkennbar. Es besteht daher für eine potentielle Videoverbindung de facto keine Möglichkeit des Abgriffs mehr, weder für Audio noch für Video. Nur statistische Daten und Signalisierungsdaten (Interception Related Information = IRI) des Rufs können gesichert werden.

Für die Praxis bedeutet dies, dass Teilnehmer nur solange abgehört werden können, so lange sie im TDM-Netz telephonieren. Da die Videotelephonie im Service-Angebot der Festnetzbetreiber mittlerweile einen festen Platz innehat, entsteht hier für das Leistungsmerkmal LI ein Problem, da im Paketnetz der zugehörige Video-Nutzdatenstrom dem Zugriff der LEAs (Law Enforcement Agency) entzogen ist. Mangels entsprechender Standards haben die LEAs zur Zeit keine IP-basierten Schnittstellen. Die beabsichtigt schnelle und breite Einführung der Videotelephonie verschärft die Anforderungslage für LI in dieser Hinsicht.

Der Erfindung liegt die Aufgabe zugrunde, einen Weg aufzuzeigen, wie für multimediale Verbindungen das Leistungsmerkmal LI effizient eingesetzt werden kann.

Die Erfindung wird ausgehend von dem im Oberbegriff der Patentansprüche 1, 3 und 9 angegebenen Merkmale durch die kennzeichnenden Merkmale gelöst.

Vorteilhaft an der Erfindung ist, dass der abzuhörende Teilnehmer den Nutzdatenabgriff z. B. aufgrund Verzögerungen bei den Übertragung der Nutzdaten (mangelnde Lippensynchronität) nicht bemerkt. Ferner sind die Eingriffe in das paketbasierte Vermittlungssystem minimal:
So wird die Logik oder die Vermittlungstechnik des paketbasierten Vermittlungssystems nicht beeinflusst. Wegen der Verarbeitung des Nutzdatensignals können existierende Schnittstellen der LEAs verwendet werden. Die Anpassungen erfolgen LEA-spezifisch, der Abgriff und Anpassung an LEA-Format kann zweistufig in verschiedenen Einrichtungen erfolgen. Dieses Konzept deckt auch die Bedienung von LEA's mit neuen Schnittstellen für klassische TDM-Verbindungen ab.

Mit diesem Konzept können auch CallP Features abgedeckt werden. So ist das Abhören bei Aktivierung der Leistungsmerkmale Call Forwarding oder Call Transfer ebenso möglich, wie das Abhören von Konferenzen.

Gemischte Audio + Video Ströme (codiert z.B. in MPEGx) können, angepasst an die Bedürfnisse der LEAs, gesplittet werden. Das Audio und Video-Signal kann in Form von zwei unabhängigen Rufen an die LEAs mit konventionellen Schnittstellen übertragen werden.

Schließlich ist eine schrittweise Einführung des LEA-Zugriffs auf die Nutzdaten einer Multimedia-Verbindung durch Anpassung des Typs des Nutzdatensignals (kein/ nur Audio/ Video+Audio, Video+Audio+Daten) möglich. Die Anpassung der Bandbreite des Video-Anteils oder des Gesamtstroms Audio + Video ist ebenso möglich (volle Bandbreite ohne Veränderungen, Zwischenspeicherung und nachlaufende Übertragung mit niedriger Bandbreite, Verarbeitung insbesondere Kompression auf 64kbit/s).

Vorteilhafte Weiterbildungen der Erfindung sind in den Unteransprüchen angegeben.

Die Erfindung wird im Folgenden anhand eines figürlich dargestellten Ausführungsbeispiels näher erläutert.

Es zeigen:
- Fig 1: eine Netzkonfiguration mit PSTN/ ISDN Endgeräten, Media Gateways und Media Gateway Controllern und LEA's gemäß dem Stand der Technik,
- Fig 2: die Netzkonfiguration gemäß der Erfindung,
- Fig 3: die Logik der Umwandlung der IP Endpunktdaten im Falle von LI im paketbasierten Vermittlungssystem mit der Steuerung LICA,

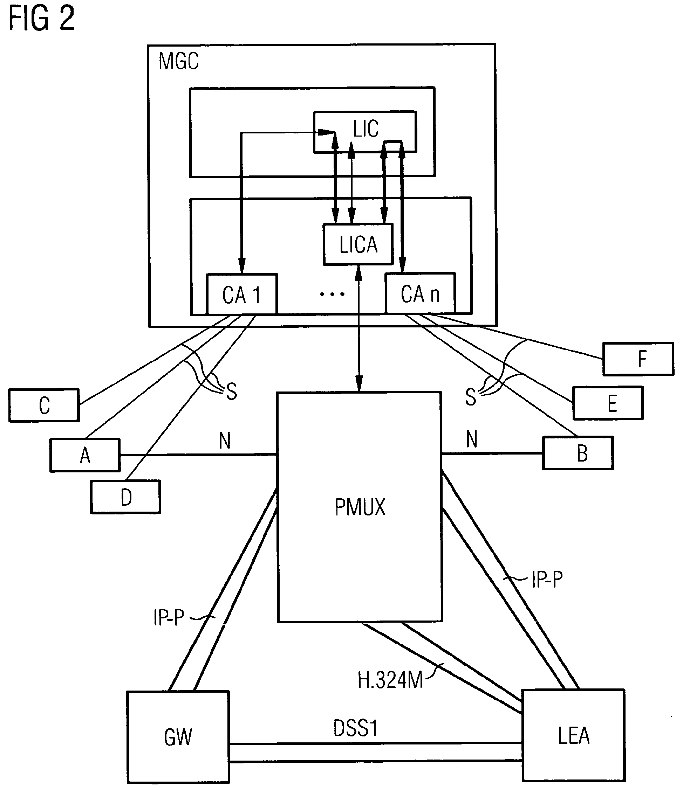

Fig. 2 zeigt die Netzkonfiguration gemäß der Erfindung. Demgemäß ist eine Mehrzahl von Endgeräten A...F aufgezeigt, die über Signalisierungsverbindungen S (Teilnehmersignalisierung, Zwischenamtssignalisierung) an einen Media Gateway Controller oder Softswitch MGC herangeführt sind. Hierbei werden die Signalisierungsverbindungen in speziellen Schnittstelleneinrichtungen, sog. Call Agent Einrichtungen CA (CA1...CAn) abgeschlossen. Die Call Agents CA sind wesentliche Bestandteile von paketbasierten Vermittlungssystemen. Ihre Aufgabe besteht darin, über standardisierte Protokolle die abgesetzten Endgeräte des Rufs im Paketnetz zu steuern, wobei jeder Call Agent CA jeweils einen Half Call steuert. Zum Durchverbinden tauschen die Call Agents IP-Endpunktdaten IP-EPD der Endgeräte (z.B. über SDP) untereinander aus. IP-Endpunktdaten IP-EPD enthalten unter anderem die IP-Adressen und Portnummern der Endgeräte sowie Informationen über den Typ der Verbindung (Audio, Video, ....) und die verwendeten Codecs. Die an einem Ruf beteiligten Call Agents CA können in einer oder auch in mehreren Vermittlungssystemen lokalisiert sein. Der Austausch der IP-Endpunktdaten IP-EPD ist davon jedoch nicht betroffen.

Erfindungsgemäss ist nun eine Steuerung LICA (LI Connection Agent) und ein als Abgriffvorrichtung ausgebildeter Paketmultiplexer PMUX zum Abgriff des Multimediastroms vorgesehen. Der (zusätzliche) Paketmultiplexer PMUX wird in den Paketdatenstrom (Nutzdatenstrom) eingeschleift. Die Ansteuerung dieses Paketmultiplexer PMUX lässt die vermittlungstechnische Software des Softswitches MGC davon unbeeinflusst bleiben. Die Steuerung LICA ist als reine SW Funktionseinheit ausgebildet, die in den Austausch der IP-Endpunktdaten IP-EPD eingebunden ist. Sie ist in einer der beteiligten Vermittlungsstellen lokalisiert, eine Anordnung ausserhalb der beteiligten Vermittlungsstellen wäre aber ebenso möglich.

Die Steuerung LICA steht zum einen in Wirkverbindung mit einer Vorrichtung LIC, die die LI Control darstellt. Zum andern wird über ein Standard IP-Protokoll wie z.B. H.248 von der Steuerung LICA der Paketmultiplexer PMUX angesteuert. In der Steuerung LICA oder alternativ der Vorrichtung LIC ist ferner das Wissen angesiedelt, dass das Leistungsmerkmal LI für mindestens eines der Endgeräte aktiviert ist. Die Steuerung LICA erhält diese Information nach Rufnummernauswertung durch die vorgelagerte Funktionseinheit LIC oder durch eigene Aktivität (Rufnummer-Trigger). Im letzteren Fall reduziert sich die Funktionalität der LI Control LIC auf das unbedingte Einschleifen eines geeigneten LI Connection Agents LICA unter Berücksichtigung der Verfügbarkeit von LICA und Paketmultiplexer Ressourcen.

Die Steuerung LICA steuert transparent für die Call Agents CA den Datenabgriff. Die IP-Endpunktdaten IP-EPD der jeweiligen Partnerseite werden durch die IP-Endpunktdaten IP-EPD des Paketmultiplexers PMUX ersetzt. Damit werden die Nutzdaten im Falle von LI immer über den Paketmultiplexer geführt und dort, gesteuert von der Steuerung LICA, abgegriffen. Die Ersetzung beeinflusst die Funktionalität der Call Agents CA nicht.

Die Steuerung LICA steuert die Verbindung des Paketmultiplexers mit den LEAs, die vorzugsweise über ein IP Protokoll IP-P (z. B. H.323 oder auch SIP) geführt wird. Falls der Abgriff in der TDM Welt (TDM LEA) erfolgen soll, werden die abzugreifenden Informationen über ein IP Protokoll IP-P einem Gateway GW und von dort z. B. über ein DSS1 Protokoll den LEAs zugeführt.

Der Eingriff der Steuerung LICA unterstützt auch vermittlungstechnische Funktionen (Teilnehmer-Features) wie Call Forwarding oder Call Transfer. Alle diese Features werden von den Call Agents CA in gewohnter Weise abgewickelt. Der Algorithmus des IP-Endpunktdaten Austauschs bleibt stets derselbe. Gleiches gilt auch für Konferenzen, die mit derselben Methode abgegriffen werden können. Hierbei liegt der Konferenzpunkt im Endgerät oder einer weiteren Einrichtung, z. B. einem zentralen Media Server. Bei Konferenzfunktionalität im Paketmultiplexer kann der Konferenzpunkt auch dort liegen.

Die im Paketmultiplexer PMUX abgegriffenen Nutzdaten beinhalten den Audiostrom und, abhängig von den Fähigkeiten der LEA, auch den Videostrom. Sollte aus einem einzigen Datenstrom mit Audio- und Videodaten (z.B. MPEG2 mit Audio + Video) nur der Audioteil benötigt werden oder wird der Videoteil aus anderen technischen Gründen separat gebraucht, so splittet der Paketmultiplexer den Strom in Richtung LEA (MPEG-Splitter). Der Nutzdatenstrom zwischen den Teilnehmern bleibt davon unbeeinflusst. Gemäß Vorgabe der LEAs erfolgt der Abgriff derart, dass der von der A-Seite kommende Nutzdatenstrom und der von der B-Seite kommende Nutzdatenstrom separat in Richtung LEA weitergeleitet wird.

Der Paketmultiplexer PMUX kann je nach Anforderung des LEA die abgegriffenen Nutzdaten auf verschiedene Art und Weise abliefern:
1. Es werden lediglich die Audiodaten auf zwei LI-Verbindungen gesendet und über ein IP/ TDM Gateway an den LEA geschickt. Die Video-Daten werden nicht zu den LEAs weitergeleitet.
2. Die Audiodaten werden wie bei 1. direkt über ein Gateway an den LEA geschickt, die Videodaten werden zwischengespeichert und über den Ruf hinaus (falls dies die Bandbreite erforderlich macht) oder auch nach dem Ruf an den LEA als TDM-Daten gesendet.
3. Audio- und Videodaten werden auf stark komprimierende Codecs umgesetzt und als ein TDM-Datenstrom oder in Form separater TDM-Datenströme direkt und gleichzeitig an die LEAs gesendet. (Beispiel hierfür ist die Verwendung von H.324M in Richtung LEA.)
4. Audio- und Videodaten werden unverändert über ein IP-Protokoll an ein IP-LEA, also ein LEA mit IP-basierten Schnittstellen (SIP, H.323) gesendet.
5. Die Anpassungen an die Schnittstellen einer Mehrzahl von LEAs können vorzugsweise in einer weiteren, nachgeordneten Einrichtung zur Nutzdatenverteilung erfolgen. (2-stufiges Verfahren mit Abgriff in einer ersten Einrichtung und individuelle LEA-Anpassung und Verteilung in einer zweiten Einrichtung.) Letztere besitzt für LEAs mit konventionellen Schnittstellen TDM-Interfaces, oder es gibt einen weiteren nachgeordneten Signalisierungs- und/ oder Nutzdatenkonverter (Gateway) auf dem Weg zu den LEAs.
6. Die Anpassung an die LEA IFs erfolgt jeweils LEAindividuell, d. h. es können mehrere LEAs mit unterschiedlichen Interface-Anforderungen für den gleichen Call parallel bedient werden.
7. Es wird eine Bandbreitenanpassung ggf. mit Zwischenspeicherung vorgenommen.

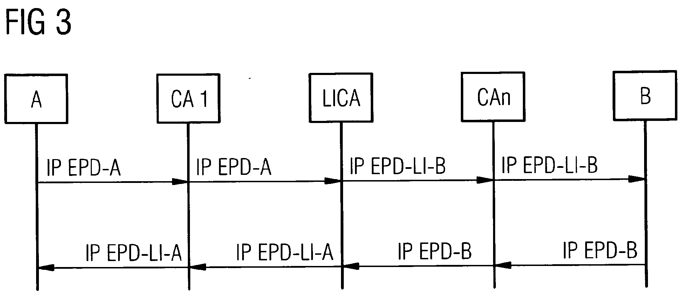

In Fig. 3 ist aufgezeigt, wie die IP-Endpunktdaten IP-EPD zwischen einem rufenden Endgerät A und einem gerufenen Endgerät B ausgetauscht werden. Hierbei werden (siehe auch Fig. 2) die IP-Endpunktdaten des Endgerätes A IP-EPD-A über die Signalisierungsverbindung dem zugeordneten Call Agent CA1 zugeführt. Dort wird die Signalisierung ausgewertet (abgeschlossen) und die IP-Endpunktdaten IP-EPD-A der Steuerung LICA zugeführt. Diese ersetzt nun die IP-Endpunktdaten IP-EPD-A durch die IP-Endpunktdaten IP-EPD-LI-B des Paketmultiplexers PMUX. Damit werden die Nutzdaten im Falle von LI immer über den Paketmultiplexer geführt und dort, gesteuert von der Steuerung LICA, abgegriffen. Die Ersetzung beeinflusst die Funktionalität der Call Agents CA nicht. Die IP-Endpunktdaten IP-EPD-B des gerufenen Endgerät B werden analog durch die IP-Endpunktdaten IP-EPD-LI-A des Paketmultiplexers PMUX ersetzt.

Bei vorliegendem Ausführungsbeispiel wurde der Nutzdatenabgriff am Beispiel der Videotelephonie aufgezeigt. Hierbei kommen lediglich zwei verschiedene Typen von Verbindungen zum Tragen, nämlich eine Sprachverbindung und eine Video- oder Bildverbindung. Mit dem Verfahren und der Vorrichtung gemäß der Erfindung können auch weitere Verbindungen wie beispielsweise Datenverbindungen abgehört werden.

## Patentansprüche

1. Verfahren zum Nutzdatenabgriff multimedialer Verbindungen in einem Paketnetz, über das Audio-, Video- und/ oder weitere Nutzdaten zwischen wenigstens zwei Endgeräten (A...F) übertragen werden, wobei während des Verbindungsaufbaus endpunktspezifische Daten (IP-EPD) ausgetauscht werden,
**dadurch gekennzeichnet,**
**dass** für die Dauer eines Rufes die endpunktspezifischen Daten (IP-EPD) der jeweiligen Partnerseite durch die endpunktspezifischen Daten (IP-EPD) einer Abgriffvorrichtung (PMUX) ersetzt werden, woraufhin die Nutzdatenströme einer multimedialen Verbindung über dieselbe geleitet und abgegriffen werden, dass die Abgriffvorrichtung (PMUX) eine Verteilung der abgegriffenen Nutzdatenströme auf eine Vielzahl von Bedarfsträgern (LEA) durchführt,
**dass** die Abgriffvorrichtung (PMUX) als Paketmultiplexer ausgebildet ist, der bedarfsträgerspezifisch eine Zwischenspeicherung von Nutzdaten und eine nacheilende Übertragung in Richtung eines Bedarfsträgers (LEA) vornimmt,
wobei die Audiodaten der multimedialen Verbindung direkt über ein Gateway an den Bedarfsträger (LEA) geschickt werden und die Videodaten der multimedialen Verbindung zwischengespeichert werden und über den Ruf hinaus als TDM Daten an den Bedarfsträger (LEA) geschickt werden, falls dies die Bandbreite der Videodaten erforderlich macht.

2. Verfahren nach Anspruch 1,
**dadurch gekennzeichnet,**
**dass** die endpunktspezifischen Daten (IP-EPD) Daten bezüglich IP Adresse, Portnummer und gegebenenfalls Codec Informationen aufweisen.

3. Vorrichtung zum Nutzdatenabgriff multimedialer Verbindungen in einem Paketnetz, das Audio-, Video- und/ oder weitere Nutzdaten überträgt,
**dadurch gekennzeichnet,**
**dass** eine Steuerung (LICA) vorgesehen ist, die für die Dauer eines Rufes die endpunktspezifischen Daten (IP-EPD) der jeweiligen Partnerseite durch die endpunktspezifische Daten (IP-EPD) Daten einer Abgriffvorrichtung (PMUX) ersetzt,
**dass** eine Abgriffvorrichtung (PMUX) vorgesehen ist, die in die Nutzdatenströme einer multimedialen Verbindung eingeschleift ist, und die nach Massgabe der Steuerung (LICA) die Nutzdatenströme mindestens dupliziert und wenigstens einem Bedarfsträger (LEA) zuführt,
**dass** die Abgriffvorrichtung (PMUX) eine Verteilung der abgegriffenen Nutzdatenströme auf eine Vielzahl von Bedarfsträgern (LEA) durchführt,
**dass** die Abgriffvorrichtung (PMUX) als Paketmultiplexer ausgebildet ist, der bedarfsträgerspezifisch eine Zwischenspeicherung von Nutzdaten und eine nacheilende Übertragung in Richtung des wenigsten einen Bedarfsträgers (LEA) vornimmt, wobei die Audiodaten der multimedialen Verbindung direkt über ein Gateway an den wenigsten einen Bedarfsträger (LEA) geschickt werden und die Videodaten der multimedialen Verbindung zwischengespeichert werden und über den Ruf hinaus als TDM Daten an den wenigsten einen Bedarfsträger (LEA) geschickt werden, falls dies die Bandbreite der Videodaten erforderlich macht.

4. Vorrichtung nach Anspruch 3,
**dadurch gekennzeichnet,**
**dass** die Steuerung (LICA) in einem paketbasierten Vermittlungssystem (MGC) angeordnet ist.

5. Vorrichtung nach Anspruch 3,
**dadurch gekennzeichnet,**
**dass** die Steuerung (LICA) außerhalb des A- oder B-seitigen paketbasierten Vermittlungssystems (MGC) im Paketnetz angeordnet ist.

6. Vorrichtung nach einem der Ansprüche 3 bis 5,
**dadurch gekennzeichnet,**
**dass** die Steuerung (LICA) in Wirkverbindung mit der Steuerung (LIC) für das gesetzlich erlaubte Abhören (LI) steht.

7. Vorrichtung nach einem der Ansprüche 3 bis 6,
**dadurch gekennzeichnet,**
**dass** in der Steuerung (LICA) oder alternativ in der Steuerung (LIC) für das gesetzlich erlaubte Abhören (LI) das Wissen über die Aktivierung des Leistungsmerkmals LI angesiedelt ist.

8. Vorrichtung nach Anspruch 7,
**dadurch gekennzeichnet,**
**dass** die Steuerung (LICA) das Wissen über die Aktivierung des Leistungsmerkmals LI über Rufnummernauswertung durch die vorgelagerte Steuerung (LIC) für das gesetzlich erlaubte Abhören (LI) oder durch eigene Aktivität erhält.

9. Vorrichtung nach einem der Ansprüche 3 bis 8,
**dadurch gekennzeichnet,**
**dass** die Abgriffsvorrichtung (PMUX) als Paketmultiplexer ausgebildet ist, der LEA-spezifisch eine Bandbreitenanpassung vornimmt.

10. Vorrichtung nach einem der Ansprüche 3 bis 9,
**dadurch gekennzeichnet,**
**dass** die Abgriffsvorrichtung (PMUX) als Paketmultiplexer ausgebildet ist, der LEA-spezifisch eine Umkodierung mindestens eines der Nutzdatenströme in Richtung LEA vornimmt.

11. Vorrichtung nach einem der Ansprüche 3 bis 10,
**dadurch gekennzeichnet,**
**dass** der Paketmultiplexer (PMUX) gegebenenfalls Audio -, Video- und weitere Nutzdaten den Bedarfsträgern als jeweils eigenen Ruf gesplittet zuführt.

## Claims

1. Method for tapping off useful data of multimedia connections in a packet network which is used to transmit audio, video and/or further useful data between at least two terminals (A...F), endpoint-specific data (IP-EPD) being interchanged while the connection is set up,
**characterized**
**in that** the endpoint-specific data (IP-EPD) of the respective partner side are replaced with the endpoint-specific data (IP-EPD) from a tapping-off apparatus (PMUX) for the duration of a call, after which the useful data streams of a multimedia connection are guided via the same and are tapped off,
**in that** the tapping-off apparatus (PMUX) distributes the useful data streams which have been tapped off to a multiplicity of consumers (LEA),
**in that** the tapping-off apparatus (PMUX) is in the form of a packet multiplexer which buffers useful data in a consumerspecific manner and carries out lagging transmission in the direction of a consumer (LEA),
the audio data of the multimedia connection being sent directly to the consumer (LEA) via a gateway and the video data of the multimedia connection being buffered and being sent to the consumer (LEA) in the form of TDM data beyond the call if necessitated by the bandwidth of the video data.

2. Method according to Claim 1,
**characterized**
**in that** the endpoint-specific data (IP-EPD) have data relating to the IP address, port number and possibly codec information.

3. Apparatus for tapping off useful data of multimedia connections in a packet network which transmits audio, video and/or further useful data,
**characterized**
**in that** provision is made of a controller (LICA) which replaces the endpoint-specific data (IP-EPD) of the respective partner side with the endpoint-specific data (IP-EPD) from a tapping-off apparatus (PMUX) for the duration of a call,
**in that** provision is made of a tapping-off apparatus (PMUX) which is looped into the useful data streams of a multimedia connection and, in accordance with the controller (LICA), at least duplicates the useful data streams and supplies them to at least one consumer (LEA),
**in that** the tapping-off apparatus (PMUX) distributes the useful data streams which have been tapped off to a multiplicity of consumers (LEA),
**in that** the tapping-off apparatus (PMUX) is in the form of a packet multiplexer which buffers useful data in a consumerspecific manner and carries out lagging transmission in the direction of the at least one consumer (LEA),
the audio data of the multimedia connection being sent directly to the at least one consumer (LEA) via a gateway and the video data of the multimedia connection being buffered and being sent to the at least one consumer (LEA) in the form of TDM data beyond the call if necessitated by the bandwidth of the video data.

4. Apparatus according to Claim 3,
**characterized**
**in that** the controller (LICA) is arranged in a packet-based switching system (MGC).

5. Apparatus according to Claim 3,
**characterized**
**in that** the controller (LICA) is arranged in the packet network outside the A-side or B-side packet-based switching system (MGC).

6. Apparatus according to one of Claims 3 to 5,
**characterized**
**in that** the controller (LICA) is operatively connected to the controller (LIC) for legally allowed eavesdropping (LI).

7. Apparatus according to one of Claims 3 to 6,
**characterized**
**in that** the knowledge relating to the activation of the performance feature LI is located in the controller (LICA) or alternatively in the controller (LIC) for legally allowed eavesdropping (LI).

8. Apparatus according to Claim 7,
**characterized**
**in that** the controller (LICA) obtains the knowledge relating to the activation of the performance feature LI via telephone number evaluation by the upstream controller (LIC) for legally allowed eavesdropping (LI) or through its own activity.

9. Apparatus according to one of Claims 3 to 8,
**characterized**
**in that** the tapping-off apparatus (PMUX) is in the form of a packet multiplexer which carries out a bandwidth adjustment in an LEA-specific manner.

10. Apparatus according to one of Claims 3 to 9,
**characterized**
**in that** the tapping-off apparatus (PMUX) is in the form of a packet multiplexer which recodes at least one of the useful data streams in the direction of the LEA in an LEA-specific manner.

11. Apparatus according to one of Claims 3 to 10,
**characterized**
**in that** the packet multiplexer (PMUX) possibly supplies audio, video and further useful data to the consumers as a separate call in each case in a split manner.

## Revendications

1. Procédé de prélèvement de données utiles de communications multimédia dans un réseau de paquets, par l'intermédiaire duquel des données utiles audio, des données utiles vidéo et/ou d'autres données utiles sont transférées entre au moins deux terminaux (A...F), dans lequel des données spécifiques de terminal (IP-EPD) sont échangées pendant l'établissement de la communication,
**caractérisé en ce que**,
pendant la durée d'un appel, les données spécifiques de terminal (IP-EPD) des côtés partenaires respectifs sont remplacées par les données spécifiques de terminal (IP-EPD) d'un appareil de prélèvement (PMUX) après quoi les flux de données utiles d'une communication multimédia sont conduits et prélevés par l'intermédiaire dudit appareil,
l'appareil de prélèvement (PMUX) réalise une répartition des flux de données utiles prélevés vers une pluralité d'opérateurs publics (LEA),
l'appareil de prélèvement (PMUX) est réalisé en tant que multiplexeur de paquets, qui entreprend une mémorisation temporaire de données utiles et un transfert déphasé en arrière en direction d'un opérateur public (LEA) de manière spécifique à l'opérateur,
dans lequel les données audio de la communication multimédia sont envoyées directement à l'opérateur public (LEA) par l'intermédiaire d'une passerelle ou d'un routeur et les données vidéo de la communication multimédia sont mémorisées de manière temporaire et envoyées postérieurement à l'appel en tant que données TDM à l'opérateur public (LEA), dans le cas où la bande passante des données vidéo rend cela nécessaire.

2. Procédé selon la revendication 1,
**caractérisé en ce que**
les données spécifiques de terminal (IP-EPD) présentent des données concernant l'adresse IP, le numéro de port et éventuellement des informations de codec.

3. Appareil de prélèvement de données utiles de communications multimédia dans un réseau de paquets, qui transfère des données utiles audio, des données utiles vidéo et/ou d'autres données utiles,
**caractérisé en ce que**,
un dispositif de commande (LICA) est prévu, qui remplace pendant la durée d'un appel les données spécifiques de terminal (IP-EPD) des côtés partenaires respectifs par les données spécifiques de terminal (IP-EPD) d'un appareil de prélèvement (PMUX),
un appareil de prélèvement (PMUX) est prévu, qui se trouve dans la boucle des flux de données utiles d'une communication multimédia, et qui au moins duplique les flux de données utiles sur instruction du dispositif de commande (LICA) et les achemine vers au moins un opérateur public (LEA),
l'appareil de prélèvement (PMUX) réalise une répartition des flux de données utiles prélevés vers une pluralité d'opérateurs publics (LEA),
l'appareil de prélèvement (PMUX) est réalisé en tant que multiplexeur de paquets, qui réalise une mémorisation temporaire de données utiles et un transfert déphasé en arrière en direction du au moins un opérateur public (LEA) de manière spécifique à l'opérateur,
dans lequel les données audio de la communication multimédia sont envoyées directement par l'intermédiaire d'une passerelle à l'au moins un opérateur public (LEA) et les données vidéo de la communication multimédia sont mémorisées de manière temporaire et sont envoyées à l'au moins un opérateur public (LEA) en tant que données TDM postérieurement à l'appel, dans le cas où la bande passante des données vidéo rend cela nécessaire.

4. Appareil selon la revendication 3,
**caractérisé en ce que**
le dispositif de commande (LICA) est agencé dans un système de commutation à base de paquets (MGC).

5. Appareil selon la revendication 3,
**caractérisé en ce que**
le dispositif de commande (LICA) est agencé dans le réseau de paquets en dehors du système de commutation à base de paquets (MGC) côté A ou côté B.

6. Appareil selon l'une quelconque des revendications 3 à 5,
**caractérisé en ce que**
le dispositif de commande (LICA) est en liaison fonctionnelle avec le dispositif de commande (LIC) pour l'interception légale (LI).

7. Appareil selon l'une quelconque des revendications 3 à 6,
**caractérisé en ce que**
dans le dispositif de commande (LICA) ou en variante dans le dispositif de commande (LIC) pour l'interception légale (LI), la connaissance est déclenchée par l'activation de la fonction offerte aux usagers (LI).

8. Appareil selon la revendication 7,
**caractérisé en ce que**
le dispositif de commande (LICA) obtient la connaissance de l'activation de la fonction offerte aux usagers LI par l'intermédiaire de l'exploitation du numéro d'appel grâce au dispositif de commande (LIC) situé en amont pour l'interception légale (LI) ou grâce à une activité particulière.

9. Appareil selon l'une quelconque des revendications 3 à 8,
**caractérisé en ce que**
l'appareil de prélèvement (PMUX) est réalisé en tant que multiplexeur de paquets, qui réalise une adaptation de la bande passante de manière spécifique au LEA.

10. Appareil selon l'une quelconque des revendications 3 à 9,
**caractérisé en ce que**
l'appareil de prélèvement (PMUX) est réalisé en tant que multiplexeur de paquets, qui réalise un transcodage d'au moins un des flux de données utiles en direction du LEA de manière spécifique au LEA.

11. Procédé selon l'une quelconque des revendications 3 à 10,
**caractérisé en ce que**,
le multiplexeur de paquets (PMUX) achemine le cas échéant des données utiles audio, des données utiles vidéo et d'autres données utiles aux opérateurs publics sous une forme répartie par appel propre respectif.
